# EUROPÄISCHE PATENTSCHRIFT

(11) **EP 1 023 194 B1**
(45) Veröffentlichungstag und Bekanntmachung des Hinweises auf die Patenterteilung: **06.04.2005**
(21) Anmeldenummer: 99942882.4
(22) Anmeldetag: 18.08.1999
(51) Int. Cl.: B60J 10/02

(54) **SCHEIBENEINHEIT**
WINDOW UNIT
UNITE FENETRE

(30) Priorität: 18.08.1998 DE 19837308
(43) Veröffentlichungstag der Anmeldung: 02.08.2000
(73) Patentinhaber: RICHARD FRITZ GMBH + CO. KG, 74354 Besigheim (DE)
(72) Erfinder: KIRIAKOU, Wassilios, D-74376 Gemmrigheim (DE)
(74) Vertreter: Kastner, Hermann, Dipl.-Ing.
(86) Internationale Anmeldenummer: PCT/EP1999/006051
(87) Internationale Veröffentlichungsnummer: WO 2000/010825

(56) Entgegenhaltungen:
- EP-A- 0 128 837
- EP-A- 0 249 560
- WO-A-95/21749
- DE-A- 3 333 672
- DE-A- 4 141 813
- DE-A- 19 504 828
- FR-A- 2 757 805

## Beschreibung

Die Erfindung bezieht sich auf eine Scheibeneinheit gemäß dem in der EP 0 249 560 A1 offenbarten Oberbegriff des Anpruchs 1.

Aus der DE 195 04 828 A1 ist eine Scheibeneinheit bekannt, bei der ein sekundärer Rahmenteil an der Glasscheibe angeformt wird und nachträglich mit einem primären Rahmenteil vereinigt wird, der gesondert hergestellt wurde. Bei dieser Scheibeneinheit ist von Nachteil, dass der sekundäre Rahmenteil in einer starren Spritzform an der Scheibe angeformt wird. Dadurch ist ein Einstellen des Rahmens auf die Glasscheibe nicht möglich. Die Abweichungen können bis zu 3 mm betragen.

Aus der EP 0 249 560 A1 ist eine Scheibeneinheit bekannt, die ebenfalls einen zweiteiligen Rahmen aufweist. Beide Rahmenteile sind als gesonderte Profilteile aus einem elastischen Werkstoff hergestellt.

Der primäre Rahmenteil in der EP 0 249 560 A1 hat ein U-förmiges Profil. An der innen gelegenen Übergangsstelle zwischen dem Stegteil und dem benachbartem Profilschenkel des primären Rahmenprofils schließt eine Zunge an, die mit einem gewissen Abstand vom Stegteil des U-Profils annähernd parallel zu diesem daran entlang verläuft. Der sekundäre Rahmenteil hat näherungsweise ein L-förmiges Profil mit einem breiten Profilschenkel, der als Abdeckteil dient. Daran schließt etwa rechtwinklig ein leistenförmiger Profilteil an, der auf einer Seite oder auf beiden Seiten mit Profilabschnitten versehen ist, die mit darauf abgestimmten Profilabschnitten an der Außenseite des Stegteils des primären Rahmenteils und/oder an der Innenseite der Zunge zusammenwirken, so dass die beider Rahmenteile miteinander verriegelt sind. Die beiden Rahmenteile können jedoch wieder voneinander gelöst werden.

Bei allen Ausführungsvarianten aus der EP 0 249 560 A1 wird der primäre Rahmenteil mit dem U-förmigen Profil auf den Rand der Scheibe aufgeschoben, bis die Innenseite des Stegteils des Rahmenprofils an der Randfläche der Scheibe anliegt. Dort kann der Steg des U-Profils und damit der primäre Rahmenteil bei Bedarf mittels eines Klebstoffauftrages mit der Randfläche der Glasscheibe verklebt werden. Der primäre Rahmenteil folgt also immer dem Verlauf der Randlinie der Scheibe.

Der Erfindung liegt die Aufgabe zugrunde, eine Scheibeneinheit zu schaffen, deren Rahmen sich leicht auf die Abmessung der Glasscheibe einstellen läßt. Diese Aufgabe wird durch eine Scheibeneinheit mit den im Anspruch 1 angegebenen Merkmalen gelöst.

Dadurch, daß der Rahmen zweiteilig ausgebildet ist und aus einem Grundrahmen und aus einem Zusatzrahmen zusammengesetzt wird, die beide als gesondertes Formteil je für sich hergestellt werden, können sowohl der Grundrahmen wie auch der Zusatzrahmen aus einem Werkstoff hergestellt werden, dessen Eigenschaften ganz auf die Erfordernisse des betreffenden Rahmenteils ausgerichtet sind. Dadurch, daß der Grundrahmen nur eine einzige Anlagefläche aufaufweist, mittels der er an einer der Seiten der Scheibe angelegt und mit ihr dauerhaft verbunden werden kann, kann der Grundrahmen nach dem Rand der Scheibe oder nach einer Äquidistanten ausgerichtet werden. Dadurch, daß beide Rahmenteile je eine Anschlußfläche aufweisen, die aufeinander abgestimmt sind, kann der Zusatzrahmen mit dem Grundrahmen lösbar oder unlösbar verbunden werden, wobei er dann ebenfalls nach dem Rand der Glasscheibe oder nach einer Äquidistanten ausgerichtet ist.

Bei einer Ausgestaltung nach Anspruch 2 ist es möglich, den Zusatzrahmen gegenüber dem Grundrahmen auf eine unterschiedliche Relativlage in Bezug auf den Abstand zur Scheibe auszurichten.

Durch eine Ausgestaltung nach Anspruch 3 wird der Zusatzrahmen mit dem Grundrahmen dauerhaft und unverrückbar verbunden. Durch eine Ausgestaltung nach Anspruch 4 ist der Zusatzrahmen mit dem Grundrahmen lösbar verbunden, so daß er bei Bedarf durch einen Zusatzrahmen mit gleicher Profilgestaltung aber aus einem anderen Kunststoff ausgetauscht werden kann. Er kann ebenso gut aber auch gegen einen Zusatzrahmen mit einer anderen Profilgestaltung ausgetauscht werden.

Im folgenden wird die Erfindung anhand zweier in den Zeichnungen dargestellter Ausführungsbeispiele näher erläutert. Es zeigen:
- Fig. 1: einen ausschnittweise dargestellten Querschnitt einer Scheibeneinheit aus Scheibe und zweiteiligem Rahmen, zusammen mit einem Karosserieteil;
- Fig. 2: einen ausschnittweise dargestellten Querschnitt einer ersten Ausführungsform des zweiteiligen Rahmens;
- Fig. 3: einen ausschnittweise dargestellten Querschnitt einer zweiten Ausführungsform des zweiteiligen Rahmens.

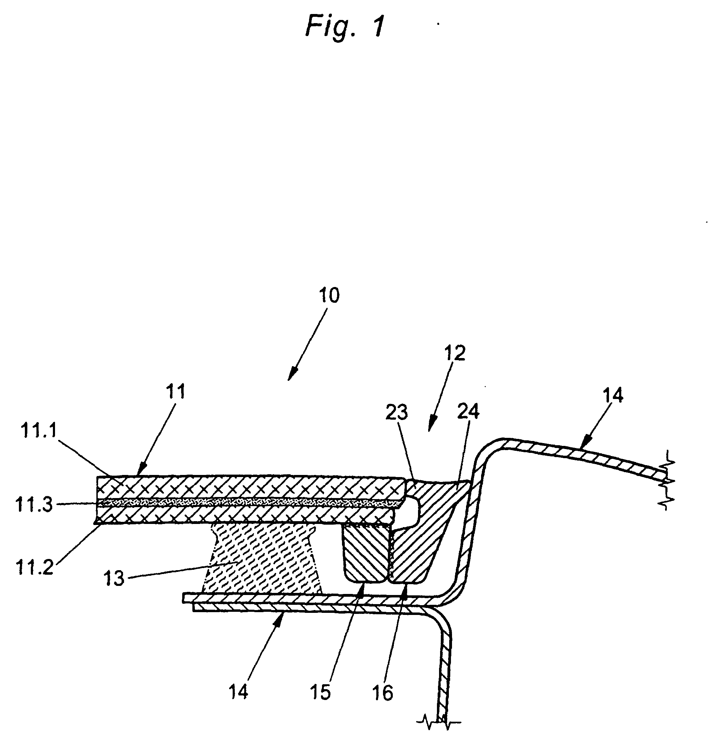

Die aus Fig. 1 ersichtliche Scheibeneinheit 10 weist eine Scheibe 11 und einen Rahmen 12 auf.

Die Scheibe 11 ist als Verbundglasscheibe ausgebildet, die aus einem außen gelegenen Scheibenteil 11.1 und aus einem innen gelegenen Scheibenteil 11.2 zusammmengestzt ist, die mittels einer Zwischenscicht 11.3 dauerhaft miteinander verbunden sind. Der Rahmen 12 ist entlang dem Randbereich der Scheibe 11 mit dieser verbunden. Die Scheibeneinheit 10 ist mittels einer Klebstoffraupe 13 mit einem Karosserieteil 14 verbunden.

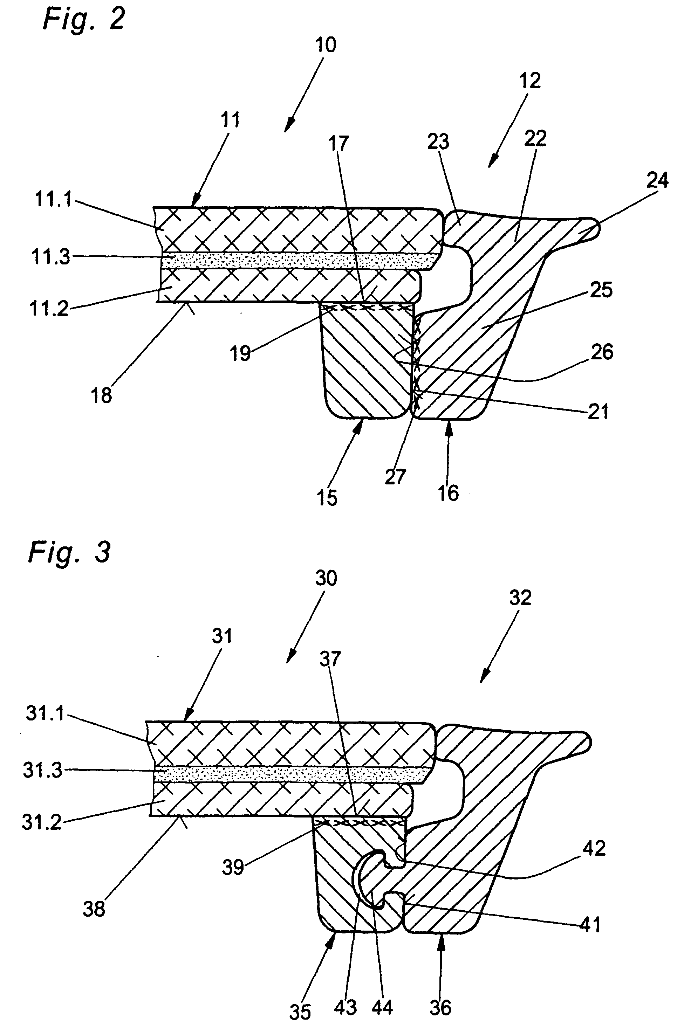

Bei dem aus Fig. 2 ersichtlichen Ausführungsbeispiel der Scheibeneinheit 10 ist der Rahmen 11 zweiteilig ausgebildet und aus einem Grundrahmen 15 und einem Zusatzrahmen 16 zusammengesetzt.

Der Grundrahmen 15 weist an seiner der Scheibe 11 zugekehrten Seite eine Anlagefläche 17 auf, mittels der er an der Innenseite 18 der Scheibe 11 in deren Randbereich anliegt und mittels eines Klebstoffauftrages 19 mit ihr dauerhaft verbunden ist. Der Grundrahmen 15 weist auf seiner in Fig. 2 rechts gelegenen Außenseite eine Anschlußfläche 21 auf. Diese dient der Verbindung mit dem Zusatzrahmen 16. Die Anschlußfläche 21 ist zumindest annähernd normal zur Fläche der Scheibe 11 ausgerichtet.

Der Zusatzrahmen 16 bildet einen Übergang von der Scheibe 11 zu dem Karosserieteil 14 (Fig. 1). Er weist daher einen Profilabschnitt 22 mit zwei Anlagelippen 23 u. 24 auf. Die erste Anlagelippe 23 liegt an der Umfangsfläche der Scheibe 11 an. Die zweite Anlagelippe 24 liegt an einem gegenüberliegenden Flächenabschnitt des Karosserieteils 14 an (Fig. 1). Der Profilabschnitt 22 hat eine solche Gestalt, daß in der Einbaulage der Scheibeneinheit 10 die beiden Anlagelippen mit einer gewissen Vorspannung an dem jeweils benachbarten Teil anliegen. Wenn die Scheibe 11 als Verbundglasscheibe ausgebildet ist, wie es in Fig. 2 dargestellt ist, ist es zweckmäßig, daß die erste Anlagelippe 23 an dem außen gelegenen Scheibenteil 11.1 der Verbundglasscheibe anliegt.

Bei dem Zusatzrahmen 16 schließt an den Profilabschnitt 22 ein zweiter Profilabschnitt 25 an, der sich zumindest annähernd bis zur Ebene der Unterseite des Grundrahmens 15 erstreckt. Dieser Profilabschnitt 25 weist auf der dem Grundrahmen 15 zugekehrten Seite eine Anschlußfläche 26 auf, die auf die Anschlußfläche 21 des Grundrahmens 15 abgestimmt ist.

Der Grundrahmen 15 ist an der Scheibe 11 so angeordnet, daß seine Anschlußfläche 21 zumindest annähernd bündig mit dem Rand der Scheibe 11, insbesondere mit dem Rand des außen gelegenen Scheibenteils 11.1, ist. Je nach den Gegebenheiten der Scheibe 11 und/oder des Karrosserieteils 14 kann es aber auch zweckmäßig sein, den Grundrahmen nach einer Äquidistanten zum Rand der Scheibe 11 auszurichten.

Der Zusatzrahmen 16 ist mit dem Grundrahmen 15 mittels eines Klebstoffauftrages 27 dauerhaft verbunden, der entweder an der Anschlußfläche 21 des Grundrahmens oder an der Anschlußfläche 26 des Zusatzrahmens oder auch an beiden Anschlußflächen angebracht worden ist. Der Zusatzrahmen 16 ist am Grundrahmen 15 derart angeordnet, daß seine erste Anlagelippe 23 zumindest annähernd auf der Höhe des Randes des außen gelegenen Scheibenteils 11.1 gelegen ist.

Auf diese Weise können einerseits Toleranzen der Scheibengröße und andererseits Toleranzen des Randverlaufes der Scheibe leicht ausgeglichen werden. Die Ausrichtung des Zusatzrahmens 16 relativ zum Grundrahmen 15 kann aber auch nach anderen Gesichtspunkten erfolgen.

Die aus Fig. 3 ersichtliche Scheibeneinheit 30 weist die Scheibe 31 und den Rahmen 32 auf. Die Scheibe 31 ist wiederum als Verbundglasscheibe ausgebildet, die den außen gelegenen Scheibenteil 31.1 und den innen gelegenen Scheibenteil 31.2 aufweist, die mittels der Zwischenschicht 31.3 dauerhaft miteinander verbunden sind. Der Rahmen 32 ist wiederum zweiteilig ausgebildet und aus dem Grundrahmen 35 und dem Zusatzrahmen 36 zusammengesetzt. Der Grundrahmen 35 weist die der Scheibe 31 zugekehrte Anlagefläche 37 auf, die mit der Unterseite 38 der Scheibe 31 mittels des Klebstoffauftrages 39 dauerhaft verbunden ist. Der Grundrahmen 35 weist auf der dem Zusatzrahmen 36 zugekehrten Seite die zumindest annähernd ebene Anschlußfläche 41 auf. An ihr liegt die Anschlußfläche 42 des Zusatzrahmens 36 an. Für die Verbindung der beiden Rahmenteile 35 und 36 sind Verbindungselemente vorhanden, die durch aufeinander abgestimmte Profilabschnitte einerseits des Grundrahmens 35 und andererseits des Zusatzrahmens 36 gebildet werden.

Am Grundrahmen 35 wird dieser Profilabschnitt durch eine Ausnehmung 43 mit pilzförmigem Aufriß gebildet, die zum Zusatzrahmen 36 hin offen ist. Am Zusatzrahmen 36 wird der entsprechende Profilabschnitt durch einen Vorsprung 44 gebildet, der ebenfalls einen pilzförmigen Aufriß hat, der auf den Aufriß der Ausnehmung 43 abgestimmt ist. Die Profilabschnitte 43 und 44 sind entlang der Längserstreckung der Rahmenteile 35 und 36 zumindest abschnittweise vorhanden. Im allgemeinen erstrecken sie sich über die gesamte Umfangslänge der Rahmenteile.

Der Grundrahmen 35 wird an der Scheibe 31 so angeordnet, daß seine Anschlußfläche 41 mit dem Rand der Scheibe 31, insbesondere mit dem Rand des außen gelegenen Scheibenteils 31.1, bündig ist. Der Zusatzrahmen 36 ist aufgrund des Ineinandergreifens der Profilabschnitte 43 und 44 in seiner Relativlage gegenüber dem Grundrahmen 35 und der Scheibe 11 festgelegt. Der Zusatzrahmen 36 kann aber bei Bedarf ausgetauscht werden, z.B. gegen einen Rahmenteil aus einem anderem Werkstoff, aber auch gegen einen Rahmenteil mit einer anderen Profilgestaltung, insbesondere mit anderen Abmessungen, die auf abweichende Abmessungen der Scheibe 11 und/oder des Karrosserieteils 14 abgestimmt sind.

### Bezugszeichenliste

- 10: Scheibeneinheit
- 11: Scheibe
- 12: Rahmen
- 13: Klebstoffraupe
- 14: Karosserieteil
- 15: Grundrahmen
- 16: Zusatzrahmen
- 17: Anlagefläche
- 18: Innenseite
- 19: Klebstoffauftrag
- 21: Anschlußfläche
- 22: Profilabschnitt
- 23: erste Anlagelippe
- 24: zweite Anlagelippe
- 25: Profilabschnitt
- 26: Anschlußfläche
- 27: Klebstoffauftrag
- 30: Scheibeneinheit
- 31: Scheibe
- 32: Rahmen
- 35: Grundrahmen
- 36: Zusatzrahmen
- 37: Anlagefläche
- 38: Unterseite
- 39: Klebstoffauftrag
- 41: Anschlußfläche
- 42: Anschlußfläche
- 43: Profilabschnitt
- 44: Profilabschnitt

¹ Semi-colons have been inserted by the translator between the reference numerals in Claim 1 in conformity with the following claims.

## Patentansprüche

1. Scheibeneinheit mit den Merkmalen:
- es ist eine Scheibe (11; 31) vorhanden,
- es ist ein Rahmen (12; 32) vorhanden,
- der Rahmen (12; 32) ist zweiteilig ausgebildet und aus einem Grundrahmen (15; 35) und aus einem Zusatzrahmen (16; 36) zusammengesetzt,
- der Grundrahmen (15; 35) ist als gesondertes Formteil aus einem elastischen Werkstoff hergestellt,
- der Zusatzrahmen (16; 36) ist als gesondertes Formteil hergestellt,
- der Grundrahmen (15; 35) weist eine Anschlußfläche (21; 41) für die Verbindung mit dem Zusatzrahmen (16; 36) auf,
- der Zusatzrahmen (16; 36) weist eine Anschlußfläche (26; 42) auf, die auf die Anschlußfläche (21; 41) des Grundrahmens (15; 35) abgestimmt ist,
- der Zusatzrahmen (16; 36) ist über seine Anschlußfläche (26; 42) und die Anschlußfläche (21; 41) des Grundrahmens (15; 35) mit dem Grundrahmen (15; 35) lösbar oder unlösbar verbunden,
**gekennzeichnet durch** die Merkmale:
- der Grundrahmen (15; 35) weist nur auf einer Seite eine Anlagefläche (17; 37) für die Scheibe (11; 31) auf,
- - mittels der er an einer der Seiten der Scheibe (11; 31) anliegt und
- - über die er mittels eines Klebstoffauftrages (19; 39) mit der Scheibe (11; 31) dauerhaft verbunden ist.

2. Scheibeneinheit nach Anspruch 1, mit den Merkmalen:
- die Anschlußflächen (21; 26) am Grundrahmen (15) und am Zusatzrahmen (16) sind zumindest annähernd normal zur Fläche der Scheibe (11) ausgerichtet.

3. Scheibeneinheit nach Anspruch 1, mit den Merkmalen:
- die beiden Rahmenteile (15; 16) sind mittels eines Klebstoffauftrages (27) dauerhaft miteinander verbunden, der an einer der beiden Anschlußflächen (21; 26) oder an beiden angebracht ist.

4. Scheibeneinheit nach Anspruch 1, mit den Merkmalen:
- im Bereich der Anschlußflächen (41; 42) des Grundrahmens (35) und des Zusatzrahmens (36) sind aufeinander abgestimmte Verbindungselemente angeformt, die durch Profilabschnitte (43; 44) gebildet werden, mittels der die beiden Rahmenteile (35; 36) entlang ihrer Längserstreckung zumindest abschnittweise durch Formschluß miteinander verbunden sind.

## Claims

1. A window unit comprising the features:
- there is a window pane (11; 31)¹
- there is a frame (12; 32)
- the frame (12; 32) is in two parts and is composed of a basic frame (15; 35) and an additional frame (16; 36),
- the basic frame (15; 35) is manufactured from a resilient material as a separate moulding,
- the additional frame (16; 36) is manufactured as a separate moulding,
- the basic frame (15; 35) has a contact surface (21; 41) for the connection to the additional frame (16; 36),
- the additional frame (16; 36) has a contact surface (26; 42) which is adapted to the contact surface (21; 41) of the basic frame (15; 35),
- the additional frame (16; 36) is detachably or permanently joined to the basic frame (15; 35) via its contact surface (26; 42) and the contact surface (21; 41) of the basic frame (15; 35),
**characterised by** the features:
- the basic frame (15; 35) has on one side only a mounting surface (17; 37) for the window pane (11; 31),
- - by means of which it fits against one of the sides of the window pane (11; 31), and
- - via which it is permanently joined to the window pane (11; 31) by means of an adhesive coating (19; 39).

2. A window unit according to Claim 1, comprising the features:
- the contact surfaces (21; 26) on the basic frame (15) and on the additional frame (16) are oriented at least approximately perpendicularly to the surface of the window pane (11).

3. A window unit according to Claim 1, comprising the features:
- the two frame parts (15; 16) are permanently joined together by means of an adhesive coating (27) which is applied to one of the two contact surfaces (21; 26) or to both.

4. A window unit according to Claim 1, comprising the features:
- within the area of the contact surfaces (41; 42) of the basic frame (35) and of the additional frame (36), mutually adapted connection elements are formed thereon, which elements are created by shaped portions (43; 44), by means of which the two frame parts (35; 36) are joined together by means of positive locking at least in portions along their longitudinal extent.

## Revendications

1. Unité de vitrage comprenant :
- une vitre (11, 31),
- un châssis (12, 32),
- le châssis (12, 32) est formé de deux parties comprenant un châssis de base (15, 35) et un châssis complémentaire (16, 36),
- le châssis de base (15, 35) est une pièce moulée particulière en matière élastique,
- le châssis complémentaire (16, 36) est une pièce moulée particulière,
- le châssis de base (15, 35) comporte une surface de raccordement (21, 41) pour être reliée au châssis complémentaire (16, 36),
- le châssis complémentaire (16, 36) comporte une surface de raccordement (26, 42) correspondant à la surface de raccordement (21, 41) du châssis de base (15, 35),
- le châssis complémentaire (16, 36) est relié par sa surface de raccordement (26, 42) et la surface de raccordement (21, 41) du châssis de base (15, 35) au châssis complémentaire (16, 36) par une liaison amovible ou solidaire,
**caractérisé en ce que**
- le châssis de base (15, 35) ne comporte une surface d'appui (17, 37) pour la vitre ( 11, 31 ) que sur un côté,
* par cette surface d'appui il vient contre un côté de la vitre (11, 31), et
* par cette surface d'appui il est relié de manière permanente à la vitre ( 11, 31 ) par une application de colle (19, 39).

2. Unité de vitrage selon la revendication 1,
**caractérisée en ce que**
les surfaces de raccordement (21, 26) du châssis de base (15) et du châssis complémentaire (16) sont dirigées au moins sensiblement dans la direction normale à la surface de la vitre (11).

3. Unité de vitrage selon la revendication 1,
**caractérisée en ce que**
les deux parties de châssis (15, 16) sont reliées de manière définitive par une application de colle (27) prévue sur l'une des deux surfaces de raccordement (21, 26) ou sur les deux.

4. Unité de vitrage selon la revendication 1,
**caractérisée en ce qu'**
au niveau des surfaces de raccordement (41, 42) du châssis de base (35) et du châssis complémentaire (36) on a des éléments de liaison correspondants formés par des segments de profil (43, 44) permettant de relier les deux parties de châssis (35, 36) le long de leur extension longitudinale au moins par segments, par une liaison par la forme.
